# EUROPÄISCHE PATENTANMELDUNG

(11) **EP 0 562 259 A1**
(43) Veröffentlichungstag der Anmeldung: **29.09.1993**
(21) Anmeldenummer: 93102297.4
(22) Anmeldetag: 13.02.1993
(51) Int. Cl.: G02B 6/44

(54) **Optische Faser mit zusätzlicher Farbmarkierung**

(30) Priorität: 26.03.1992 DE 4209830
(71) Anmelder: KABEL RHEYDT Aktiengesellschaft, D-41179 Mönchengladbach (DE)
(72) Erfinder: Bartling, Franz-Peter, Dipl.-Ing., W-4000 Düsseldorf (DE); Broden, Rainer, W-4050 Mönchengladbach 1 (DE); Haag, Helmut, Dipl.-Ing., W-5177 Titz (DE); Hoffart, Michael, Dipl.-Ing., W-5628 Heiligenhaus (DE); Lysson, Hans-Jürgen, Dipl.-Ing., W-4052 Korschenbroich 2 (DE); Zamzow, Peter, Dipl.-Ing., W-4630 Bochum 1 (DE)
(74) Vertreter: Mende, Eberhard, Dipl.-Ing.

(57) **Zusammenfassung**

Zur Erhöhung der Identifizierungsmerkmale optischer Fasern (9) mit einem oder mehreren Schutzüberzügen (10, 11) und einer außen liegenden Farbbeschichtung (12) aus UV-gehärteten Lacken sind in die außen liegende Farbbeschichtung (12) zusätzliche andersfarbige Farbkennzeichnungsmarkierungen (13) integriert.

## Beschreibung

Die vorliegende Erfindung betrifft eine optische Faser mit einem oder mehreren Schutzüberzügen aus polymeren Werkstoffen (coating) und einer außen liegenden Farbbeschichtung aus UV-gehärteten Lacken.

Aus den sogenannten Preforms gezogene Glasfasern für die Nachrichtenübermittlung lassen sich so nicht weiterverarbeiten. Bereits die Führung der blanken Faser über Umlenkrollen macht es erforderlich, daß die Faser beschichtet wird, um deren hohe Ausgangsfestigkeit zu erhalten. Aber auch der Schutz vor dem Auftreten von Faserbiegungen (microbending) macht eine Beschichtung der einzelnen Faser erforderlich. Zu diesem Zweck werden eine oder mehrere Überzüge, beispielsweise aus einem polymeren Material, auf den Mantel der Glasfaser aufgebracht, wobei beim Aufbringen mehrerer Schichten diese sich regelmäßig in ihren mechanischen Eigenschaften unterscheiden. So kann zum Schutz der Faser vor Mikrokrümmungen als sogenanntes primary coating eine verhältnismäßig weich eingestellte Polymerschicht auf die blanke Faser aufgebracht sein, während den äußeren mechanischen Schutz als sogenanntes secondary coating ein zweiter Überzug aus einem Material mit erhöhtem E-Modul, der die Längssteifigkeit der Faser erhöht, übernimmt.

Sind nun in einem optischen Kabel eine Vielzahl so geschützter Fasern untergebracht, dann ist es erforderlich, die einzelnen Übertragungselemente identifizieren zu können, wenn solche Kabel montiert werden. Diesem Zweck dient beispielsweise eine auf die äußere Hülle aufgebrachte Farbbeschichtung, die diese allseitig umgibt, die Eigenschaften der eigentlichen Beschichtung aber nicht verändert. Oft reicht aber auch ein solcher die Faser umschließender Farbauftrag nicht aus, um die Fasern eines Kabels mit Sicherheit auseinander halten zu können. Aus diesem Grunde hat man auch bereits Adern gleicher Farbgebung mit einer zusätzlichen Ringsignierung versehen, wobei die Anzahl der zusammengehörigen Ringe bzw. deren Abstand voneinander variiert werden kann.

Bei diesem bekannten Kennzeichnungsverfahren wird die Ringsignierung in einem nachgeschalteten Arbeitsschritt vorgenommen, es werden lösungsmittelhaltige Kennzeichnungsfarben verwendet, die anschließend einem Trocknungsvorgang unterworfen werden müssen. Die Haftfähigkeit der zusätzlichen Kennzeichnung ist dabei von dem für die Hülle verwendeten Material abhängig bzw. von den Vorbereitungen, die vor der Signierung getroffen werden müssen.

Ausgehend von diesem Stand der Technik liegt der Erfindung die Aufgabe zugrunde, zusätzliche Kennzeichnungsinformationen dauerhaft ohne weitere Arbeitsgänge auf die Faser aufzubringen.

Gelöst wird diese Aufgabe gemäß der Erfindung dadurch, daß in die außen liegende Farbbeschichtung zusätzliche, andersfarbige Farbkennzeichnungsmarkierungen integriert sind. Durch diese Anordnung zusätzlicher Farbkennzeichnungsmarkierungen innerhalb der Farbbeschichtung entfallen weitere, die Faserkennzeichnung betreffende Verfahrensschritte. Darüberhinaus ist die zusätzliche Kennzeichnung dauerhaft angebracht, ein versehentliches Abwischen oder Abreiben ist vermieden. Die jeweilige Faser ist jederzeit identifizierbar.

Wie bei der Kennzeichnung mit einem oder mehreren Ringen läßt auch die Erfindung eine Vielfalt von Kennzeichnungsvarianten zu. So können die andersfarbigen Farbkennzeichnungsmarkierungen z. B. eine oder mehrere am Umfang verteilte und in Längsrichtung verlaufende Kennzeichnungsstriche oder -streifen sein. Diese Striche oder Streifen können auch, wie erfindungsgemäß weiter vorgesehen, in Abständen unterbrochen sein, wobei die gewählten Abstände weiterhin unterschiedlich sein können.

Wird, wie bei der Erfindung vorgesehen, für die außen liegende Farbbeschichtung ein UV-gehärteter Lack verwendet, dann hat es sich als zweckmäßig erwiesen, auch für die andersfarbige Farbkennzeichnungsmarkierung einen entsprechenden Lack zu wählen. Die Aushärtung der verwendeten Lacke erfolgt dann praktisch gleichzeitig nach dem ebenfalls gleichzeitigen Aufbringen von die Faser überdeckender Farbbeschichtung und zusätzlicher Markierung. Der für die zusätzliche Farbkennzeichnung verwendete Lack wird zweckmäßig einer auf Basis Acrylat, Polyester und dergleichen sein, wobei für die einfarbige Farbbeschichtung der Faser und die zusätzliche Farbmarkierung entsprechende Lacke mit gleicher Aushärtungszeit verwendet werden können.

Die Integration der andersfarbigen Farbkennzeichnungsmarkierungen in die außen liegende Farbbeschichtung der Faser macht es erforderlich, daß, wie in Durchführung der Erfindung vorgesehen, der UV-härtbare Lack der Farbbeschichtung und der andersfarbigen Farbkennzeichnungsmarkierungen gleichzeitig aufgebracht werden. Dabei sind entsprechend der gewünschten Anzahl der zusätzlichen Markierungen bzw. ihrer Anordnung auf der Oberfläche der Faser die geometrischen Abmessungen der Farbkennzeichnungsmarkierungen steuerbar.

Für die problemlose Identifizierung der einzelnen, bereits eine Grundfärbung aufweisenden Fasern, ist es erforderlich, daß die zusätzlichen Farbkennzeichnungsmarkierungen sich nach Form und/oder Farbauswahl von der Grundeinfärbung und deren Anordnung unterscheiden. Eine klare und eindeutige Abgrenzung ist hierfür Voraussetzung. Aus diesem Grunde hat es sich in Durchführung der Erfindung als zweckmäßig erwiesen, daß die Fließfähigkeit der beiden zur Kennzeichnung verwendeten eingefärbten Lacke unterschiedlich ist. Dies führt zu klaren Begrenzungslinien der zusätzlichen Farbmarkierungen im Bereich der Basiseinfärbung, ein Verlaufen der verwendeten Lacke unterschiedlicher Einfärbung ist vermieden.

Besonders vorteilhaft ist in diesem Zusammenhang aber eine den Anforderungen bei der Kennzeichnung angepaßte Vorrichtung. Diese ist gekennzeichnet durch eine Ringdüse mit zusätzlicher Beschichtungskammer und radial angeordneten Zuführungskanälen für den Farbkennzeichnungslack. Dabei ist die ringförmige Beschichtungskammer mit der Anzahl der andersfarbigen Farbkennzeichnungsmarkierungen entsprechenden Anzahl von Überströmkanälen ausgestattet. Die geometrischen Abmessungen dieser Überströmkanäle bestimmen die Abmessungen der zusätzlichen Farbkennzeichnung während des Fertigungsablaufes, ihre Anordnung relativ zur Faser bestimmen die Anordnung oder die Lage der Farbkennzeichnung auf dem Faserumfang.

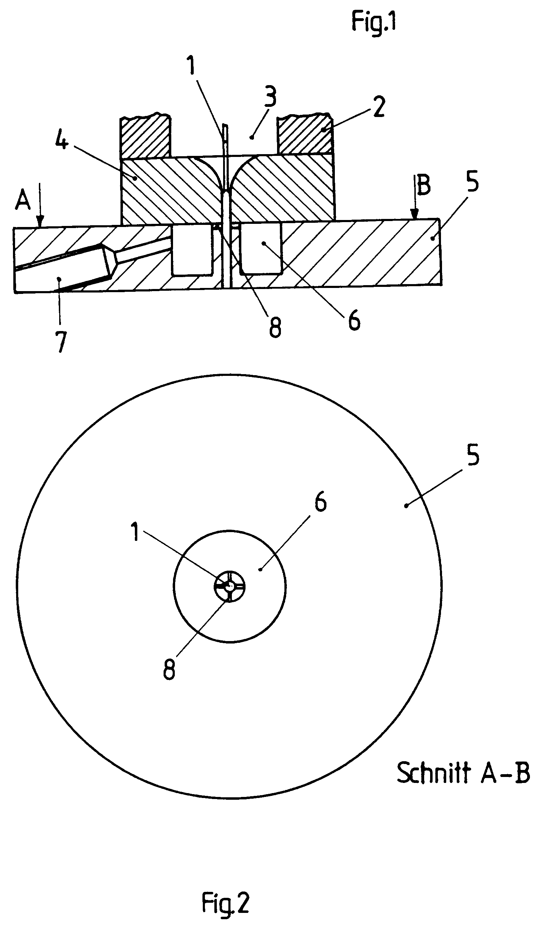

Die Erfindung sei anhand der in den Figuren 1 bis 3 dargestellten Ausführungsbeispiele näher erläutert.

Die in einem oder mehreren vorhergehenden Arbeitsschritten bereits beschichtete Faser 1 durchläuft die schematisch dargestellte Beschichtungsvorrichtung 2, in dessen Aufnahme 3 sich eine hinreichende Menge geeigneten Farbbeschichtungsmaterials befindet. Das Beschichtungsmaterial ist durch UV-Strahlen vernetz- bzw. aushärtbar, für die Zwecke der Erfindung geeignete Materialien sind beispielsweise Lacke auf Acrylat-, Polyester-Basis und dergl. Der Rundumfarbauftrag für die Grundkennzeichnung erfolgt in der Auftragsdüse 4.

Nach der Erfindung sind die andersfarbigen Farbkennzeichnungsmarkierungen in der ersten Farbbeschichtung integriert. Um das zu erreichen, wird, wie aus der Fig. 1 ersichtlich, die mit dem ersten Farbauftrag versehene Faser 1 in eine zweite Beschichtungsvorrichtung 5 eingeführt, die sich unmittelbar an die erste Beschichtungsvorrichtung 2 anschließt. Die zusätzlichen Farbkennzeichnungsmarkierungen werden also bereits aufgebracht, bevor die erste Farbbeschichtung ausgehärtet ist. Hierzu dient eine in der Beschichtungsvorrichtung 5 angeordnete Verteilkammer 6, sie dient zur Aufnahme des zusätzlichen Farbmittels, beispielsweise eines UV-härtenden Acrylat-Lackes, die Lackzufuhr erfolgt über eine mit einem Farbvorrat verbundene Leitung 7. Die Verteilkammer 6, die die durchlaufende Ader ringförmig umschließt, erlaubt es, eine zusätzliche Farbkennzeichnung, beispielsweise in Form längs verlaufender Farbstriche, über den Umfang der Faser verteilt anzuordnen. Hierzu dienen Überströmkanäle 8, von denen beispielsweise, wie die Fig. 2 in einem Schnitt längs der Linie A-B erkennen läßt, vier am Umfang verteilt angeordnet sind.

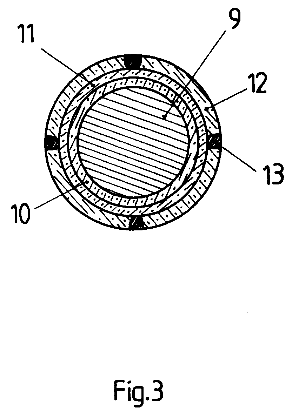

Die Fig. 3 schließlich verdeutlicht die Anordnung der zusätzlichen Farbkennzeichnungsmarkierungen innerhalb der Grundmarkierung. So ist die optische Faser 9 von den Kunststoffschichten 10 und 11 umgeben, als sogenanntes primary und secondary coating, darüber befindet sich die einfarbige Farbkennzeichnung 12, die mittels der Beschichtungsvorrichtung 2 aufgetragen ist. Innerhalb dieser Farbkennzeichnung 12, d. h. integriert in diese, sind vier andersfarbige, beispielsweise in Längsrichtung verlaufende, Farbkennzeichnungsmarkierungen 13 vorgesehen. Anstelle der in der Fig. 3 dargestellten, am Umfang der Faser 9 verteilten vier Längsstriche können auch einer oder z. B. zwei um 180° versetzt angeordnete Längsstriche zur zusätzlichen Kennzeichnung der Faser mit dem Verfahren nach der Erfindung erzeugt werden. Durch geeignete Geometrie der Beschichtungsvorrichtung 5 sowie sorgfältige Einstellung der Parameter, wie Druck und Temperatur, wird eine Vermischung der beiden Kennzeichnungsformen während des praktisch gleichzeitigen Auftragens der Farbe auf die Umhüllung der Faser oder auch unerwünschte Aussetzer in der zusätzlichen Kennzeichnung vermieden.

## Patentansprüche

1. Optische Faser mit einem oder mehreren Schutzüberzügen aus polymeren Werkstoffen und einer außen liegenden Farbbeschichtung aus UV-gehärteten Lacken, dadurch gekennzeichnet, daß in die außen liegende Farbbeschichtung zusätzliche, andersfarbige Farbkennzeichnungsmarkierungen integriert sind.

2. Optische Faser nach Anspruch 1, dadurch gekennzeichnet, daß die andersfarbigen Farbkennzeichnungsmarkierungen eine oder mehrere am Umfang verteilte und in Längsrichtung verlaufende Kennzeichnungsstriche oder -streifen sind.

3. Optische Faser nach Anspruch 1 oder 2, dadurch gekennzeichnet, daß die Kennzeichnungsstreifen oder -striche in Abständen unterbrochen sind.

4. Optische Faser nach Anspruch 1 oder einem der folgenden, dadurch gekennzeichnet, daß der Werkstoff der andersfarbigen Farbkennzeichnungsmarkierung ebenfalls ein UV-ausgehärteter Lack ist.

5. Optische Faser nach Anspruch 4, dadurch gekennzeichnet, daß der Werkstoff der andersfarbigen Farbkennzeichnungsmarkierung ein UV-ausgehärteter Lack auf Acrylat-Basis ist.

6. Verfahren zur Herstellung einer optischen Faser nach einem oder mehreren der Ansprüche 1 bis 5, dadurch gekennzeichnet, daß der UV-härtbare Lack der Farbbeschichtung und die andersfarbigen Farbkennzeichnungsmarkierungen gleichzeitig aufgebracht werden.

7. Verfahren nach Anspruch 6, dadurch gekennzeichnet, daß die geometrischen Abmessungen der Farbkennzeichnungsmarkierungen steuerbar sind.

8. Verfahren nach Anspruch 6 oder 7, bei dem für die Farbbeschichtung und die andersfarbige Farbkennzeichnungsmarkierung UV-härtbare Lacke verwendet werden, dadurch gekennzeichnet, daß die Fließfähigkeit der beiden Lacke unterschiedlich ist.

9. Vorrichtung zur Durchführung des Verfahrens nach Anspruch 6 oder einem der folgenden, gekennzeichnet durch eine Ringdüse mit zusätzlicher Beschichtungskammer und radial angeordneten Zuführungskanälen für den Farbkennzeichnungslack.

10. Vorrichtung nach Anspruch 9, dadurch gekennzeichnet, daß die ringförmige Beschichtungskammer mit der Anzahl der andersfarbigen Farbkennzeichnungsmarkierungen entsprechenden Anzahl von Überströmkanälen ausgestattet ist.
